(19) Europäisches Patentamt
European Patent Office
Office européen des brevets

(11) **EP 1 745 267 B1**

(12) **FASCICULE DE BREVET EUROPEEN**

(45) Date de publication et mention
de la délivrance du brevet:
**16.07.2008 Bulletin 2008/29**

(21) Numéro de dépôt: **05747089.0**

(22) Date de dépôt: **22.04.2005**

(51) Int Cl.:
***G01J 3/44*** *(2006.01)*  ***G01C 9/06*** *(2006.01)*

(86) Numéro de dépôt international:
**PCT/FR2005/050273**

(87) Numéro de publication internationale:
**WO 2005/106698 (10.11.2005 Gazette 2005/45)**

(54) **DETERMINATION D'UNE FONCTION D'AUTOCORRELATION**

VERFAHREN ZUR BESTIMMUNG EINER AUTOKORRELATIONSFUNKTION

METHOD OF DETERMINING AN AUTOCORRELATION FUNCTION

(84) Etats contractants désignés:
**AT BE BG CH CY CZ DE DK EE ES FI FR GB GR HU IE IS IT LI LT LU MC NL PL PT RO SE SI SK TR**

(30) Priorité: **27.04.2004 FR 0450799**

(43) Date de publication de la demande:
**24.01.2007 Bulletin 2007/04**

(73) Titulaire: **CENTRE NATIONAL DE LA RECHERCHE SCIENTIFIQUE (CNRS)**
**75794 Paris Cedex 16 (FR)**

(72) Inventeurs:
• **LEQUEUX, François**
**F-75010 PARIS (FR)**
• **LOPEZ-RIOS, Julien**
**F-38700 LA TRONCHE (FR)**

(74) Mandataire: **de Beaumont, Michel**
**Cabinet Beaumont**
**1, rue Champollion**
**38000 Grenoble (FR)**

(56) Documents cités:
• **EID JOHN S ET AL: "Data acquisition card for fluctuation correlation spectroscopy allowing full access to the detected photon sequence" REVIEW OF SCIENTIFIC INSTRUMENTS, AMERICAN INSTITUTE OF PHYSICS, US, vol. 71, no. 2, février 2000 (2000-02), pages 361-368, XP012037982 ISSN: 0034-6748 cité dans la demande**
• **R.SPRIK, E.BAAIJ: "Multichannel scaler for general statistical analysis of dynamic light scattering" REVIEW OF SCIENTIFIC INSTRUMENTS, vol. 73, no. 6, 1 juin 2002 (2002-06-01), pages 2440-2444, XP002309763 NEW YORK, USA cité dans la demande**
• **OPPENHEIM A V, WILLSKY A S, YOUNG I T: "SIGNALS AND SYSTEMS" 1983, PRENTICE HALL INTERNATIONAL EDITIONS , LONDON , XP002354502 page 223 - page 225**

EP 1 745 267 B1

**Description**

La présente invention concerne un corrélateur permettant de déterminer la fonction d'autocorrélation d'un signal lumineux dans le cadre de mesures par exemple en spectroscopie par fluorescence, en spectroscopie Raman, ou par diffusion de lumière quasi-élastique (simple ou multiple). Dans ce cadre, on cherche à déterminer la fonction d'autocorrélation d'un signal réémis ou diffusé par un milieu contenant des particules où des molécules éclairé par une source lumineuse. Cette fonction permet notamment de caractériser la mobilité dès particules ou molécules dans le milieu éclairé.

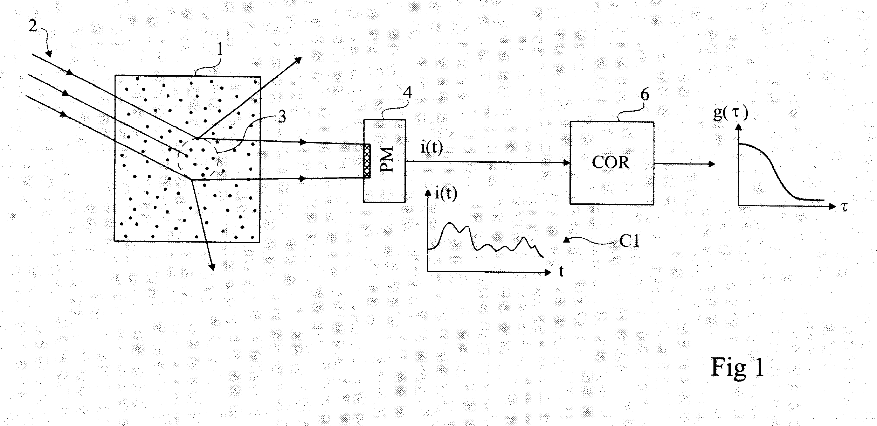

La figure 1 est un schéma sous forme de blocs d'un montage de spectroscopie de corrélation de fluorescence. Dans un récipient 1 est placée une solution contenant des particules que l'on souhaite caractériser. Un faisceau laser 2 stimule les particules situées dans un petit volume 3 de la solution. Les particules éclairées réémettent sensiblement dans toutes les directions. Un photorécepteur (photomultiplicateur) 4 capte une partie de la lumière réémise et fournit un signal électrique i(t) dont un exemple est illustré par la courbe C1. Ce signal électrique est reçu par un corrélateur 6 qui calcule la fonction d'autocorrélation:

$$g(\tau) = <i(t)*i(t+\tau)>$$

de l'intensité i(t) du signal lumineux pour diverses valeurs d'écarts temporels $\tau$, < > représentant une moyenne sur le temps.

La forme générale usuelle de la fonction d'autocorrélation est représentée en figure 1. Plus la fonction d'autocorrélation conserve une valeur élevée pour des écarts temporels $\tau$ importants, plus la zone éclairée est stable, et inversement.

Les corrélateurs les plus couramment utilisés mettent en oeuvre un algorithme nommé "multi-tau" développé par Klaus Schätzel en 1975. Ce type de corrélateur permet de calculer directement la fonction d'autocorrélation d'un signal en effectuant les calculs au fur et à mesure de l'acquisition du signal représentatif de l'intensité du signal lumineux reçu. Ces corrélateurs se révèlent néanmoins peu satisfaisants lorsque le signal lumineux analysé présente une faible intensité, le rapport signal sur bruit devenant critique. De plus, le principe même de cet algorithme entraîne que l'on obtient seulement une approximation de la fonction d'autocorrélation recherchée.

Un autre mode de calcul de la fonction d'autocorrélation est décrit dans l'article "Multichannel scaler for general statistical analysis of dynamic light scattering" de R. Sprik et E. Baaij, publié dans "REVIEW OF SCIENTIFIC INSTRUMENTS" de juin 2002. Le calcul de la fonction d'autocorrélation $g(\tau)$ est effectué selon une méthode de "double transformée de Fourier". Dans un premier temps, on calcule le spectre en puissance S(w) du signal i(t), S(w) étant égal au module au carré de la transformée de Fourier s(w) du signal i(t). Dans un deuxième temps, on calcule la transformée de Fourier du spectre en puissance S(w), qui est la fonction g ($\tau$). Ce procédé fournit une valeur exacte de la fonction d'autocorrélation mais présente également l'inconvénient d'être inefficace lorsque le signal lumineux analysé présente une faible intensité. De plus, il nécessite la réalisation d'un nombre important de calculs.

Un objet de la présente invention est de prévoir un corrélateur capable de calculer avec précision une fonction d'autocorrélation en un temps réduit, ce corrélateur étant particulièrement adapté à un signal lumineux de faible intensité.

Un autre objet de la présente invention est de prévoir un tel corrélateur nécessitant un espace restreint de mémorisation du signal représentatif du signal lumineux étudié.

Pour atteindre ces objets, la présente invention prévoit un procédé de détermination de la fonction d'autocor-rélation $g(\tau)$ d'un signal optique, comprenant les étapes suivantes :

- déterminer les instants ($t_i$) d'apparition de photons ;
- calculer, pour un ensemble prédéterminé de pulsations (w), la fonction

$$s(w) = \sum_i e^{-jwt_i}$$

où $e^{-jwt_i} = \cos wt_i + j\sin wt_i$, la sommation étant effectuée sur toutes les impulsions reçues,

- déterminer le carré S(w) du module de la fonction s(w) , et
- calculer la transformée de Fourier $g(\tau)$ du spectre en puissance S (w) pour un ensemble prédéterminé de valeurs d'écarts temporels.

Selon un mode de réalisation de la présente invention, les instants ($t_i$) d'apparition des impulsions sont déterminés depuis un instant de référence ou depuis l'instant d'apparition de l'impulsion précédant l'impulsion considérée, sous la forme d'un nombre ($n_i$) de cycles d'une horloge de référence.

Selon un mode de réalisation de la présente invention, lesdites impulsions correspondent au signal de sortie d'un photorécepteur recevant une séquence de photons.

Selon un mode de réalisation de la présente invention, le calcul de la fonction s (w) est effectué pour un ensemble de valeurs d'écarts temporels réparties logarithmiquement.

Selon un mode de réalisation de la présente invention, le calcul de la transformée de Fourier g($\tau$) est effectué pour un ensemble de pulsations réparties logarithmiquement.

La présente invention prévoit aussi un corrélateur mettant en oeuvre le procédé ci-dessus.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 est un schéma précédemment décrit d'un système de spectroscopie de corrélation de fluorescence ;
la figure 2 est un diagramme illustrant un signal représentatif de l'intensité d'un signal lumineux en fonction du temps ;
la figure 3 est un schéma d'un corrélateur selon la présente invention ; et
la figure 4 est un chronogramme illustrant les valeurs prises par divers signaux du circuit de la figure 3.

La présente invention se base sur une analyse du mode classique de calcul de transformée de Fourier dans le procédé susmentionné de "double transformée de Fourier".

On va évaluer dans la partie I ci-après le nombre d'étapes de calcul nécessaire au calcul de la transformée de Fourier du signal i(t).

On va ensuite montrer dans la partie II que, dans le cadre d'expériences telles que de spectroscopie de corrélation de fluorescence, de spectroscopie Raman, ou de diffusion de lumière quasi-élastique (simple ou multiple), contrairement à un préjugé établi, il s'avère plus économique en temps de calcul de procéder à un calcul de transformée de Fourier pour tous les photons reçus. On montrera que cela conduit en outre à des résultats plus précis, notamment au voisinage des faibles valeurs de temps de corrélation.

Ainsi, la présente invention utilise le procédé de "double transformée de Fourier" et prévoit de modifier ce procédé pour réduire la quantité de mémoire nécessaire et le nombre d'étapes de calcul, d'où il résulte que ce procédé peut être mis en oeuvre par un corrélateur simplifié.

I. Analyse d'un procédé classique de calcul de transformée de Fourier

La détermination de la fonction d'autocorrélation par le procédé susmentionné de "double transformée de Fourier" consiste à calculer d'abord le spectre en puissance S(w) du signal i(t) sur une plage de valeurs de pulsations (w) prédéterminée. Le spectre en puissance S(w) est égal au module au carré de la transformée de Fourier s(w) du signal i(t). Pour une pulsation w donnée, s(w) est donné par :

$$s(w) = \int_{-\infty}^{\infty} i(t)e^{-jwt}dt$$

où j est la variable complexe.

En pratique, pour chaque valeur de w, on calcule une somme sur un certain nombre d'instants $t_i$ :

$$s(w) = \sum_i i(t_i)e^{-jwt_i} \qquad\qquad (1)$$

Les instants $t_i$ correspondent à des intervalles de temps régulièrement répartis au cours du temps sur une période de mesure et les valeurs i($t_i$) correspondent à des moyennes effectuées sur ces intervalles de temps à partir d'échantillons relevés à haute fréquence du signal i(t). Par exemple, on échantillonne le signal i(t) sur une durée T de 10 s, à chaque cycle d'une horloge CLK de fréquence élevée, par exemple 100 MHz, ce qui fournit $10^9$ échantillons sur la durée T. Un tel échantillonnage est nécessaire pour avoir une bonne image du signal i (t) . Toutefois la sommation (1) ne peut raisonnablement être effectuée sur un nombre d'échantillons aussi élevé et devra être limitée à une sommation sur par exemple $10^6$ valeurs de prélèvement. Chacune des valeurs de prélèvement correspond, dans cet exemple, à la moyenne ou la somme des valeurs de 1000 échantillons successifs. Ainsi, pour chaque valeur $w_j$ de w, il faut effectuer

une somme de $10^6$ multiplications de $i(t_i)$ par $w_j$ et, si on veut obtenir $10^6$ valeurs de $w$, il faudra effectuer $10^6$ fois ces opérations. Le calcul de $s(w)$ implique donc le calcul de $10^{12}$ sommes de multiplications. On notera de plus que le choix d'un nombre limité de valeurs de prélèvement conduit à une perte de précision.

Pour réduire le temps de calcul, on peut utiliser des algorithmes de calcul "rapides" tels que celui bien connu de transformée de Fourier rapide.

Etant donné que la fréquence correspondant aux intervalles de temps de prélèvement est dans le cadre de l'exemple ci-dessus égale $10^5$ Hz, s(w) sera défini pour des valeurs de w (en radians/s) variant entre $2\pi/T=\pi$ (si la durée T de l'expérience est de 2s) et $2\pi10^5/2$. En conséquence, $g(\tau)$ sera défini entre $2.10^{-5}$ s et 1 s par incréments de $2.10^{-5}$ s. Cet exemple numérique est destiné à souligner que la plus petite valeur de $g(\tau)$ et l'intervalle entre les premiers points de $g(\tau)$ sont directement fonction de la fréquence de prélèvement qui est généralement très inférieure à la fréquence d'échantillonnage.

II. <u>Calcul de transformée de Fourier selon l'invention</u>

La présente invention propose d'effectuer le calcul de transformée de Fourier, non pas pour des intervalles temporels régulièrement répartis mais pour tous les photons incidents. On va montrer que, contrairement à un préjugé établi, dans le cadre de l'application envisagée, cela réduit le nombre d'étapes de calcul et fournit un résultat rigoureusement exact.

Plusieurs auteurs ont observé que, dans le domaine de la spectroscopie de fluorescence par corrélation et analogue, l'un des problèmes réside dans le très petit nombre de photons disponibles. Ceci a par exemple été souligné dans l'article de John S. Eid et al paru dans Review of Scientific Instruments, volume 71, N° 2, février 2000. Ceci est également souligné dans l'article susmentionné de Sprik et al paru dans la même revue en 2002. Plus particulièrement, dans l'article de Eid, il est indiqué que le nombre de photons qui apparaissent dans un intervalle de mesure, par exemple 10 s, est très inférieur au nombre d'impulsions d'échantillonnage, par exemple $10^9$ dans le cas d'un échantillonnage à 100 MHz, ce nombre de photons étant par exemple de l'ordre de 100000. Ce chiffre est confirmé dans l'article de Sprike et al susmentionné. En raison de ce nombre de photons, Eid propose, plutôt que de procéder à un échantillonnage et de mesurer pour chaque créneau d'échantillonnage si un photon est présent ou non, de conserver en mémoire seulement les instants auxquels les photons apparaissent. On notera d'ailleurs que l'on peut soit mémoriser les instants auxquels les photons apparaissent à partir d'un instant d'origine soit les intervalles de temps entre apparitions de photons. Ainsi, dans le cas où seulement 100000 photons apparaissent, on mémorisera seulement $10^5$ points au lieu de $10^9$ dans le cas d'un échantillonnage à 100 MHz pendant une durée de 10 secondes. Ceci économise de la place en mémoire. Toutefois, aucun des auteurs ayant noté ce faible nombre de photons n'en a déduit des conséquences sur la façon de calculer la transformée de Fourier et les calculs de double transformée de Fourier ont continué à être effectués de la façon classique susmentionnée.

Selon la présente invention, on note que, le signal i(t) étant constitué d'une suite d'impulsions dont l'amplitude et la largeur sont sans signification,

$$s(w) = \int_{-\infty}^{\infty} i(t)e^{-jwt}\, dt$$

est strictement identique à :

$$s(w) = \sum_i e^{-jwt_i} \qquad\qquad (2)$$

où $e^{-jwt_i} = \cos wt_i + j\sin wt_i$, la sommation étant effectuée sur tous les photons reçus.

La formule (2) permet un calcul beaucoup plus simple et plus rapide qu'un calcul normal de transformée de Fourier du signal i(t) selon la formule (1).

Ainsi, pour le calcul de la transformée de Fourier, pour chaque valeur $w_j$ de w, on calcule, ou plus couramment on recherche dans une table, les valeurs de sinwt et de coswt et ces valeurs sont utilisées directement étant donné qu'elles sont affectées d'un coefficient multiplicatif constant, égal à 1. Ainsi, selon l'invention, on réduit le nombre de calculs effectués, qui est limité au nombre de photons reçus, et de plus chaque calcul est plus simple puisqu'il comprend seulement une valeur de $\cos w_j t$ ou de $\sin w_j t$ sans coefficient multiplicatif. Ainsi, non seulement le nombre d'opérations est plus faible mais en plus chaque opération élémentaire est plus simple.

Par exemple, si on échantillonne le signal i(t) sur une durée T de 10 s, à 100 MHz, et que l'on reçoit $10^5$

photons/s, il faut, pour chaque valeur $w_j$ de w, effectuer une somme de $10^6$ valeurs et, si on veut obtenir $10^6$ valeurs de w, il faudra effectuer $10^6$ fois cette opération. Le calcul de s(w) implique donc seulement le calcul de $10^6$ sommes au lieu de $10^6$ sommes de multiplications par le procédé classique. Le procédé selon la présente invention nécessite un nombre d'opérations encore plus faible quand le nombre de photons/s décroît en conservant un caractère rigoureux, le calcul effectué n'impliquant aucune étape d'approximation.

Par ailleurs, les inventeurs ont noté qu'il est possible d'obtenir une représentation de S très correcte à partir d'un ensemble de valeurs S ($w_1$) à S($w_k$) calculées pour un ensemble de pulsations $w_1$ à $w_k$. L'utilisation d'une suite de pulsations $w_1$ à $w_k$ réparties logarithmiquement permet d'obtenir une représentation de s tout à fait satisfaisante. Le choix d'une suite logarithmique de pulsations permet de diminuer de façon importante le nombre de calculs de valeurs du spectre s.

On détermine alors la fonction s'(w) obtenue en prenant les valeurs s ($w_1$) à s ($w_k$) et en faisant une extrapolation linéaire entre chacune de ces valeurs.

On calcule ensuite la transformée de Fourier g($\tau$) de S'(w). Cette transformée de Fourier est de préférence calculée pour une suite de valeurs réparties logarithmiquement de $\tau$ en notant, que dans la fonction recherchée, les points correspondant aux valeurs élevées de $\tau$ pour lesquels la valeur de g($\tau$) est faible présentent moins d'intérêt. On calculera de préférence les valeurs réelles et imaginaires de g($\tau$) par les expressions suivantes :

$$g_{r\acute{e}el}(\tau) = \Sigma_w \, S(w).cosw\tau$$

$$g_{im}(\tau) \; = \Sigma_w \, S(w).sinw\tau$$

Un avantage supplémentaire de la présente invention est que la plus petite valeur de g($\tau$) est maintenant définie en fonction de la fréquence d'échantillonnage réelle, de l'ordre de 100 MHz, c'est-à-dire que cette valeur sera de l'ordre de $10^{-8}$ seconde au lieu de $10^{-5}$ seconde comme cela a été expliqué précédemment pour le cas classique avec une même fréquence d'échantillonnage de base. On obtient ainsi une beaucoup plus grande précision de la fonction g($\tau$) au voisinage des petites valeurs de $\tau$, ce qui est la zone dans laquelle on souhaite que cette précision soit importante.

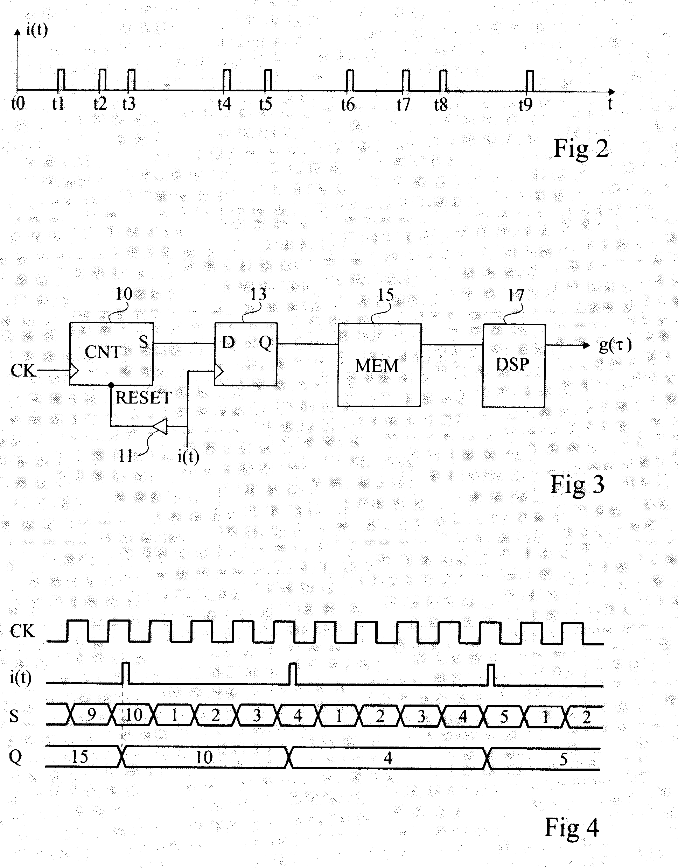

La figure 2 représente l'allure réelle du signal i(t), présent sous la forme d'une suite d'arrivée de photons espacés les uns des autres.

La figure 3 est un schéma sous forme de blocs illustrant un mode de réalisation du procédé de mémorisation susmentionné. La figure 4 illustre des signaux apparaissant en divers points du circuit de la figure 4.

En figure 3, un compteur CNT 10 reçoit un signal d'horloge (par exemple 100 MHz) et, sur son entrée de remise à zéro, le signal i(t) inversé par un inverseur 11. Le signal i(t) est également appliqué à l'entrée d'horloge d'un ensemble de registres 13. La sortie S du compteur 10 est reliée à l'entrée D de l'ensemble de registres 13. Ainsi, à chaque front montant du signal i(t), la valeur du compteur est mémorisée temporairement dans les registres 13. Peu après chaque mémorisation dans les registres 13, la valeur stockée est inscrite dans une mémoire 15. Un calculateur spécifique, DSP, 17 calcule à partir des valeurs mémorisées la fonction g($\tau$) de la façon exposée précédemment. Le fonctionnement de ce circuit se comprend mieux en se référant à la figure 4 dans laquelle sont indiqués des

**Revendications**

1. Procédé de détermination de la fonction d'autocorrélation g ($\tau$) d'un signal optique, comprenant les étapes suivantes :

- déterminer les instants ($t_i$) d'apparition d'impulsions correspondant à des photons ;
- calculer, pour un ensemble prédéterminé de pulsations (w), la fonction

$$s(w) \, = \, \sum_i \, e^{-jwt_i}$$

où $e^{-jwt_i} = cosw t_i + j sinw t_i$, la sommation étant effectuée sur toutes les impulsions reçues,
- déterminer le carré S(w) du module de la fonction s (w) , et
- calculer la transformée de Fourier g($\tau$) du spectre en puissance S(w) pour un ensemble prédéterminé de valeurs d'écarts temporels ($\tau$).

2. Procédé selon la revendication 1, dans lequel les instants ($t_i$) d'apparition des impulsions sont déterminés depuis un instant de référence ou depuis l'instant d'apparition de l'impulsion précédant l'impulsion considérée, sous la forme d'un nombre ($n_i$) de cycles d'une horloge de référence (CLK)

3. Procédé selon la revendication 1, dans lequel lesdites impulsions correspondent au signal de sortie d'un photorécepteur recevant une séquence de photons.

4. Procédé selon la revendication 2, dans lequel le calcul de la fonction s(w) est effectué pour un ensemble de valeurs d'écarts temporels réparties logarithmiquement.

5. Procédé selon la revendication 2, dans lequel le calcul de la transformée de Fourier g($\tau$) est effectué pour un ensemble de pulsations réparties logarithmiquement.

6. Corrélateur mettant en oeuvre le procédé selon l'une quelconque des revendications 1 à 5 réalisé sous forme d'un circuit intégré. exemples de chronogramme des signaux CK, i (t), S et Q pour des intervalles successifs entre photons de 15 impulsions d'horloge, 10 impulsions d'horloge, 4 impulsions d'horloge et 5 impulsions d'horloge. Bien entendu, diverses optimisations classiques du procédé de détermination de la fonction d'autocorrélation décrit précédemment pourront être utilisées en restant dans le cadre de la présente invention comme défini dans les revendications.

**Claims**

1. A method for determining the autocorrelation function g($\tau$) of an optical signal, comprising the steps of:

    - determining the times (ti) of appearance of pulses corresponding to photons;
    - calculating, for a predetermined set of angular frequencies (w), function

$$S(w) \;=\; \sum_i e^{-jwt_i}$$

    where $e^{-jwt_i} = coswt_i + jsinwt_i$, the summing-up being performed over all the received pulses
    - determining square S(w) of the module of function s(w), and
    - calculating the Fourier transform g($\tau$) of power spectrum S(w) for a predetermined set of time interval values ($\tau$).

2. The method of claim 1, in which the times ($t_i$) of occurrence of the pulses are determined from a reference time or from the time of occurrence of the pulse preceding the considered pulse, in the form of a number ($n_i$) of cycles of a reference clock (CLK).

3. The method of claim 1, in which said pulses correspond to the output signal of a photoreceiver receiving a photon sequence.

4. The method of claim 2, in which the calculation of function s(w) is performed for a set of logarithmically-distributed time interval values.

5. The method of claim 2, in which the calculation of Fourier transform g($\tau$) is performed for a set of logarithmically-distributed pulses.

6. A correlator implementing the method of any of claims 1 to 5, implemented as an integrated circuit.

**Patentansprüche**

1. Verfahren zum Bestimmen der Autokorrelationsfunktion g ($\tau$) eines optischen Signals, mit fölgenden Verfährens-schritten:

- Ermitteln der Zeitpunkte ($t_i$) des Auftretens von Impulsen, welche Photonen entsprechen;
- Berechnen folgender Funktion für eine vorgegebene Gruppe von Kreisfrequenzen (w):

$$s(w) = \sum_i e^{-jwt_i}$$

wobei $e^{-jWt_i}$ = coswt$_i$ + jsinwt$_i$, wobei die Summierung über alle empfangene Impulse durchgeführt wird;
- Ermitteln des Quadrats S(w) des Moduls der Funktion s(w); und
- Berechnen der Fourier-Transformierten g ($\tau$) des Leistungsspektrums S(w) für eine vorgegebene Gruppe von Zeitintervallwerten ($\tau$).

2. Verfahren nach Anspruch 1, wobei die Zeitpunkte ($t_i$) des Auftretens der Impulse ab einem Bezugszeitpunkt oder ab dem Zeitpunkt des Auftretens des Impulses vor dem betrachteten Impuls in der Form einer Anzahl ($n_i$) der Zyklen eines Referenztaktes (CLK) ermittelt werden.

3. Verfahren nach Anspruch 1, wobei die Impulse dem Ausgangssignal eines Photoempfängers, der eine Photonensequenz empfängt, entsprechen.

4. Verfahren nach Anspruch 2, wobei die Berechnung der Funktion s(w) für eine Gruppe von logarithmisch verteilten Zeitintervallwerten durchgeführt wird.

5. Verfahren nach Anspruch 2, wobei die Berechnung der Fourier-Transformierten g ($\tau$) für eine Gruppe von logarithmisch verteilten Impulsen durchgeführt wird

6. Korrelationseinrichtung zur Umsetzung des Verfahrens nach einem der Ansprüche 1 bis 5, die als ein integrierter Schaltkreis realisiert ist.

Fig 1

Fig 2

Fig 3

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. SPRIK ; E. BAAIJ.** Multichannel scaler for general statistical analysis of dynamic light scattering. *REVIEW OF SCIENTIFIC INSTRUMENTS,* Juin 2002

- **JOHN S. EID et al.** *Review of Scientific Instruments,* Février 2000, vol. 71 (2